# EUROPÄISCHE PATENTSCHRIFT

(11) **EP 1 472 058 B1**
(45) Veröffentlichungstag und Bekanntmachung des Hinweises auf die Patenterteilung: **16.08.2006**
(21) Anmeldenummer: 02776743.3
(22) Anmeldetag: 27.09.2002
(51) Int. Cl.: B27G 19/04, B23D 59/00

(54) **HANDKREISSÄGEMASCHINE**
MANUALLY-OPERATED CIRCULAR SAW MACHINE
SCIE CIRCULAIRE MANUELLE

(30) Priorität: 21.12.2001 DE 10163064; 12.03.2002 DE 10210721
(43) Veröffentlichungstag der Anmeldung: 03.11.2004
(73) Patentinhaber: ROBERT BOSCH GMBH, 70442 Stuttgart (DE)
(72) Erfinder: ROEHM, Heiko, 70176 Stuttgart (DE); BLUM, Jens, 70794 Filderstadt (DE)
(86) Internationale Anmeldenummer: PCT/DE2002/003686
(87) Internationale Veröffentlichungsnummer: WO 2003/055656

(56) Entgegenhaltungen:
- US-A- 5 199 343
- US-A- 5 701 676
- US-A- 5 724 875
- US-B1- 6 167 626

## Beschreibung

### Stand der Technik

Die vorliegende Erfindung geht aus von einer Handkreissägemaschine nach dem Oberbegriff des Anspruchs 1. Eine solche Vorrichtung ist aus US6167626B1 bekannt.

Es sind Handkreissägemaschinen mit einem den oberen Bereich des Sägeblatts übergreifenden Gehäuse bekannt, das einen Staubabsaugstutzen trägt. Der untere Bereich des Sägeblatts wird von einer Pendelschutzhaube umgriffen, die als Berührungsschutz dient und die den Bedienenden gegen Verletzung durch die Sägezähne des Sägeblatts schützt. Die Pendelschutzhaube ist visierartig um die Sägeblattachse in das Gehäuse schwenkbar.

Gemäß europäischen Sicherheitsvorschriften müssen derartige Handkreissägemaschinen einen Spaltkeil aufweisen, der kielartig fluchtend zum Sägeblatt ausgerichtet ist und beim Sägen mit der Handkreissägemaschine in die Spannut eintaucht.

Die Pendelschutzhaube der Handkreissägemaschinen mit Spaltkeil weist einerimittigen radialen Schlitz auf, in den der zum Sägeblatt fluchtende Spaltkeil ragt und mit dem die Pendelschutzhaube beim Bewegen von der geschlossenen in die geöffnete Position am Spaltkeil entlang in das Gehäuse gleiten kann. Dieser den Spaltkeil umgreifende Schlitz mindert die Stabilität der Pendelschutzhaube.

Nach anderen nationalen Normen hergestellte Handkreissägemaschinen verzichten auf Spaltkeile, wobei die Pendelschutzhaube auf einen radialen Schlitz verzichtet und daher stabiler ist als die geschlitzten Pendelschutzhauben von Handkreissägemaschinen mit Spaltkeil. Andererseits ist die Spanabfuhr durch das Gehäuse und die nichtgeschlitzte Pendelschutzhaube der Handkreissägemaschinen hindurch ohne Spaltkeil wenig befriedigend.

### Vorteile der Erfindung

Diese Aufgabe wird erfindungsgemäß durch die Merkmale des Hauptanspruches gelöst. Weitere vorteilhafte Ausführungsformen sind den abhängigen Ansprüchen 2 bis 5 zu entnehmen.

### Zeichnung

Nachstehend ist die Erfindung anhand eines Ausführungsbeispiels mit zugehöriger Zeichnung erläutert.

### Es zeigen

Figur 1 eine Seitenansicht einer erfindungsgemäßen Handkreissägemaschine,
Figur 2 eine Seitenansicht der Pendelschutzhaube gemäß Figur 1 und
Figur 3 eine Hinteransicht der Pendelschutzhaube gemäß Figur 2.

### Ausführungsbeispiel

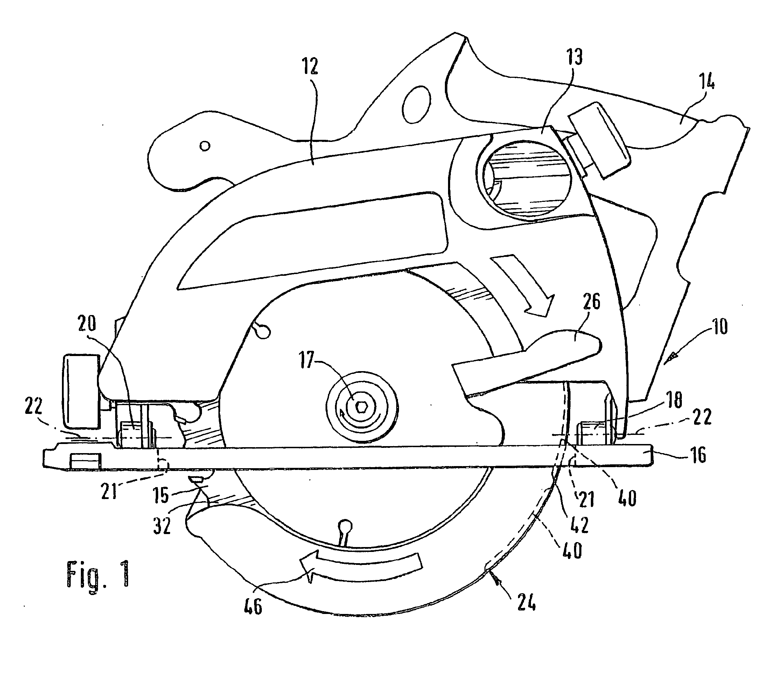

Figur 1 zeigt die Seitenansicht der Handkreissägemaschine 10 von der Flachseite des Sägeblatts 15 aus betrachtet. Im oberen Bereich ist das Sägeblatt 15 vom Sägeblattgehäuse 12 übergriffen, das einen in Betrachtungsrichtung nach rechts radial austretenden Spanabsaugstutzen 13 trägt. Axial neben dem Sägeblattgehäuse 12 ragt nach oben ein Handgriff 14, mit dem die Handkreissägemaschine 10 kontrolliert führbar ist.

Das Sägeblattgehäuse 12 ist unten über zwei Gelenke 18, 20 mit einer Fußplatte 16 einstellbar schwenkbar verbunden. Mit der Fußplatte ist sie über ein nicht dargestelltes Werkstück führbar.

Das Sägeblatt 15 ist an einer nicht näher bezeichneten Abtriebswelle mittels eines Befestigungsbolzens 17 festgespannt.

Die Fußplatte 16 weist eine Durchtrittsöffnung 21 auf, durch die das Sägeblatt 15 gemeinsam mit der Pendelschutzhaube 24 tiefenverstellbar nach unten herausragt. Die Fußplatte 16 ist gegenüber dem Sägeblattgehäuse 12 um eine Schwenkachse 22 entsprechend den Gelenken 18, 20 schwenkbar, wobei die Schwenkposition feststellbar ist. Auf diese Weise ist das Sägen von Gehrungsschnitten möglich.

Die Pendelschutzhaube 24 ist um die Mitte des Sägeblatts 15 federvorgespannt schwenkbar. Beim Sägen kommt die Stützkante 32 der Pendelschutzhaube 24 zur Anlage an ein nicht dargestelltes Werkstück und wird beim weiteren Vorschub so weit nach hinten geschwenkt, daß die Stützkante 32 über der Unterkante der Fußplatte 16 verschwindet. Wird die Handkreissägemaschine 10 vom nicht dargestellten Werkstück heruntergenommen, schwingt die Pendelschutzhaube 24 unverzüglich in die geschlossene Position zurück. Somit ist der Benutzer der Handkreissägemaschine 10 vor Verletzungen durch Berührung des Sägeblatts 15 geschützt.

Die nicht näher bezeichneten Zähne des Sägeblatt 15 wirken bei dessen Rotieren wie die Ventilatorblätter eines Radiallüfters. Die dadurch vom Sägeblatt 15 erzeugte Luftströmung bewegt sich in Richtung des Drehrichtungspfeils 46 ins Innere des Sägeblattgehäuses 12.

Ist die Pendelschutzhaube 24 geöffnet, also die Stützkante 32 entgegen dem Uhrzeigersinn verschwenkt und oberhalb der Unterkante der Fußplatte 16 positioniert, ist der hintere Bereich der Pendelschutzhaube im Bereich ihres Betätigungsgriffs 26 nach oben in den Bereich des Absaugstutzens geschwenkt. Die darin eintretende, durch das Sägeblatt. 15 geförderte Luft beschleunigt die in Richtung des Drehrichtungspfeils 46 unten an der Fußplatte von der Werkzeugeingriffsstelle nach oben austretende Sägespäne, da die Luft durch die Radialschlitze 40 der Pendelschutzhaube 24 wieder tangential in die Schutzhaube 12 abströmen kann.

Die Endlage der Pendelschutzhaube 24 wird durch einen nicht dargestellten Anschlag begrenzt, der in Folge verringerter Massenträgheit der Pendelschutzhaube 24 geringeren Verschleißkräften unterworfen wird.

Die durch den Radialschlitz 40 und den Absaugstutzen 13 abströmende Luft unterstützt den Spänestrom zwischen der Pendelschutzhaube 24 und dem Sägeblattgehäuse 12 und fördert diesen zum Absaugstutzen 13 hin.

Die verbesserte Ventilation und Spanabfuhr hat bei maximaler Schnitttiefe und vollständig geöffneter Pendelschutzhaube 24 ihr Optimum.

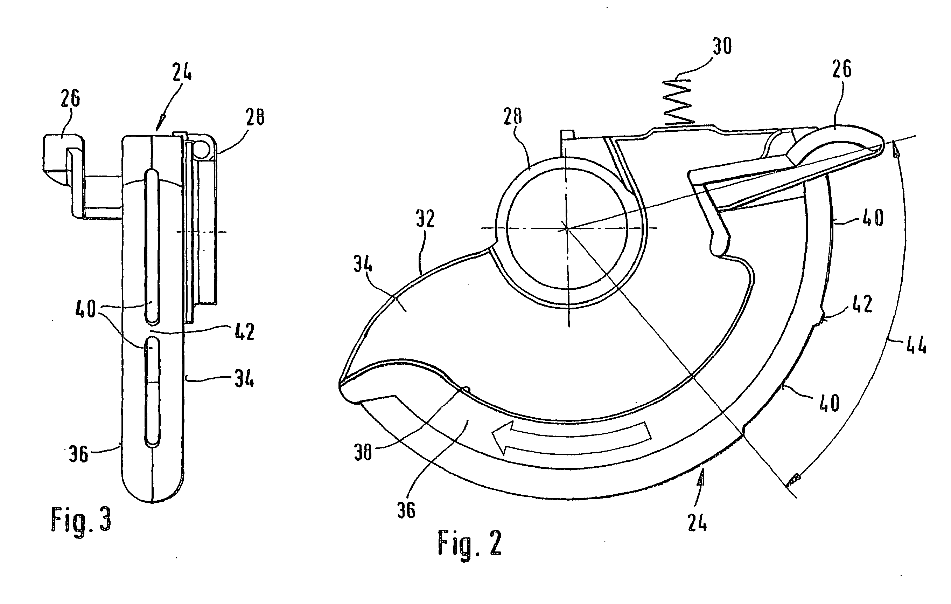

Figur 2 zeigt die Pendelschutzhaube 24 als Einzelteil, wobei deren Betätigungsgriff 26 und ihr ringartiges - auf der dem Befestigungsbolzen 17 entgegengesetzten Seite des Sägeblattgehäuses 12 angeordnetes - Drehlager 28 deutlich erkennbar ist, ebenso wie die Stützkante 32 an der Vorderseite der Pendelschutzhaube 24.

Im hinteren Bereich der Pendelschutzhaube sind über einen Winkelbereich 44 Schlitze 40 am Unfang der Pendelschutzhaube angeordnet. Ist der Winkelbereich 44 kleiner oder gleich 90°, ist mindestens ein Schlitz 40 erforderlich. Ist der Winkelbereich 44 größer als 90°, sind mindestens zwei Schlitze 40 erforderlich, wobei diese durch Querstege 42 begrenzt sind.

An ihrem oberen Rand ist die Pendelschutzhaube 24 mit einer schematisch dargestellten Zugfeder 30 versehen, deren freies Ende im eingebauten Zustand am Sägeblattgehäuse 12 eingehängt ist und die Pendelschutzhaube 24 federvorgespannt in der Schließposition hält. Zum Öffnen der Pendelschutzhaube 24 muß daher die Kraft der Zugfeder 30 überwunden werden.

Figur 3 zeigt die Hinteransicht der Pendelschutzhaube 24, wobei der Betätigungsgriff 26, das Drehlager 28 und die Radialschlitze 40 mit dem Quersteg 42 besonders deutlich erkennbar sind.

## Patentansprüche

1. Handkreissägemaschine (10) mit einem Sägeblattgehäuse (12), das auf einer Fußplatte (16) befestigt ist, das ein drehend antreibbares Sägeblatt (15) umgreift und das einen Spanabsaugskutzen (13) trägt, wobei die Fußplatte (16) von einem Sägeblatt (15) durchtreten wird, dessen Umfang von einer Pendelschutzhaube (24) ohne Verwendung eines Spaltkeils umgriffen wird, **dadurch gekennzeichnet,**
**daß** die Handkreissägemaschine (10) eine Pendelschutzhaube (24) aufweist, die auf ihrem Umfang einen radialen Schlitz (40) trägt, wobei der Schlitz (40) sich im hinteren zum Gehäuse (12) benachbarten Bereich der Pendelschutzhaube (24) über einen Winkelbereich (44) von etwa 90° erstreckt.

2. Handkreissägemaschine nach Anspruch 1, **dadurch gekennzeichnet, daß** der Schlitz (40) vom Material der Pendelschutzhaube (24) umgriffen, insbesondere durch einen Steg (42) unterbrochen, ist.

3. Handkreissägemaschine nach Anspruch 2, **dadurch gekennzeichnet, daß** der Schlitz (40) durch den Steg (42) etwa mittig unterbrochen ist.

4. Handkreissägemaschine nach einem der Ansprüche 1 bis 3, **dadurch gekennzeichnet, daß** der Schlitz (40) breiter ist als die Sägeblattdicke.

5. Handkreissägemaschine nach einem der Ansprüche 1 bis 4, **dadurch gekennzeichnet, daß** anstelle des Schlitzes (40) mehrere zueinander benachbarte Löcher angeordnet sind, deren Durchmesser größer ist als die Sägeblattdicke.

## Claims

1. Manually operated circular saw machine (10) with a disc-blade housing (12) which is fastened on a base plate (16) which engages around a rotatingly drivable disc blade (15) and which bears a chip extraction nozzle (13), the base plate (16) being passed through by a disc blade (15), the periphery of which is engaged around by a hinged protective hood (24) without the use of a splitting wedge, **characterized in that** the manually operated circular saw machine (10) has a hinged protective hood (24) which bears a radial slot (40) on its periphery, the slot (40) extending over an angular region (44) of approximately 90° in the rear region of the hinged protective hood (24), which region is adjacent to the housing (12).

2. Manually operated circular saw machine according to Claim 1, **characterized in that** the slot (40) is engaged around by the material of the hinged protective hood (24), in particular is interrupted by a web (42).

3. Manually operated circular saw machine according to Claim 2, **characterized in that** the slot (40) is interrupted approximately centrally by the web (42).

4. Manually operated circular saw machine according to one of Claims 1 to 3, **characterized in that** the slot (40) is wider than the thickness of the disc blade.

5. Manually operated circular saw machine according to one of Claims 1 to 4, **characterized in that** instead of the slot (40) there are a plurality of holes which are adjacent to one another and the diameter of which is greater than the thickness of the disc blade.

## Revendications

1. Scie circulaire portative (10) avec un boîtier de lame de scie (12) qui, fixé sur une plaque de base (16), entoure une lame de scie (15) pouvant être entraînée en rotation et porte une tubulure d'aspiration de copeaux (13), la plaque de base (16) étant traversée par une lame de scie (15) dont la périphérie est enveloppée par un capot de protection pendulaire (24) sans utilisation d'un coin à refendre,
**caractérisé en ce que**
le capot de protection pendulaire (24) porte une fente radiale (40) à sa périphérie, et cette fente (40) s'étend sur une zone angulaire (44) d'environ 90° dans la région arrière du capot de protection oscillant (24), proche du boîtier (12).

2. Scie circulaire portative selon la revendication 1,
**caractérisée en ce que**
la fente (40) est entourée par la matière du capot de protection pendulaire (24), et en particulier interrompue par une entretoise (42).

3. Scie circulaire portative selon la revendication 2,
**caractérisée en ce que**
la fente (40) est interrompue par l'entretoise environ au milieu par la traverse (42).

4. Scie circulaire portative selon l'une quelconque des revendications 1 à 3,
**caractérisée en ce que**
la fente (40) est plus large que l'épaisseur de la lame de scie.

5. Scie circulaire portative selon l'une quelconque des revendications 1 à 4,
**caractérisée en ce que**
la fente (40) est remplacée par plusieurs trous voisins l'un de l'autre, et dont le diamètre est plus grand que l'épaisseur de la lame de scie.
